# FASCICULE DE BREVET EUROPEEN

(11) **EP 1 319 580 B1**
(45) Date de publication et mention de la délivrance du brevet: **23.05.2007**
(21) Numéro de dépôt: 02293065.5
(22) Date de dépôt: 11.12.2002
(51) Int. Cl.: B62D 25/08, B62D 29/04

(54) **Pièce de structure avant de véhicule automobile munie d'un convergent et face avant technique constituant une telle pièce de structure**
Vorderes Strukturteil mit Luftleiter für ein Kraftfahrzeug und Vorderfront mit derartigem Strukturteil
Front structural vehicle part with air conductor and front body with such a part

(30) Priorité: 11.12.2001 FR 0116011
(43) Date de publication de la demande: 18.06.2003
(73) Titulaire: COMPAGNIE PLASTIC OMNIUM, 69007 Lyon (FR)
(72) Inventeur: Cheron, Hugues, 01800 Meximieux (FR); Andre, Gérald, 01500 Amberieu en Bugey (FR); Carrier, Pascal, 01100 Oyonnax (FR)
(74) Mandataire: Remy, Vincent Noel Paul

(56) Documents cités:
- EP-A- 1 067 039
- WO-A-99/54187
- DE-A- 10 048 245
- US-A1- 2001 010 275
- US-B1- 6 357 821

## Description

La présente invention concerne une pièce de structure avant de véhicule automobile munie d'un convergent pour un ensemble de refroidissement, ainsi qu'une face avant technique constituant une telle pièce de structure.

Il est bien connu que le cahier des charges sécurité d'un véhicule automobile impose notamment que son capot soit solidement maintenu fermé en cas d'accident. C'est pourquoi il est important que la traverse supérieure du compartiment moteur, ou plus généralement toute pièce de structure à laquelle le capot est accroché, présente une résistance suffisante à un effort d'arrachage du capot.

Selon le même axe de sollicitations mais dans le sens opposé, il faut également que le claquage du capot induise une flèche limitée de la pièce de structure.

Cette nécessité de résistance de ladite pièce de structure concerne l'intégralité de celle-ci et surtout sa région portant la serrure du capot.

Par ailleurs, une certaine inertance de la pièce de structure est requise, vis-à-vis de fréquences de vibration connues pour entraîner sa mise en résonance. Une pièce de structure avant de véhicule qui couvre les particularités du préambule de la revendication 1 est décrite dans le document US-A-2001/0010275.

La présente invention vise à proposer une solution de renfort d'une pièce de structure avant de véhicule automobile.

La présente invention propose une pièce de structure avant de véhicule automobile suivant les caractéristiques de la revendication indépendante 1.

Ainsi, l'invention consiste à incorporer dans la pièce de structure une pièce habituellement rapportée sur elle, à savoir le convergent, lequel est également désigné écran. La fonction habituelle du convergent est de réduire la section de passage de l'air, mais sa fixation ponctuelle à la pièce de structure ne permet pas de lui faire jouer un rôle structurel.

Grâce à l'invention, le convergent devient structurel du seul fait qu'il est intégré à la pièce de structure car il participe alors à la rigidité de ladite pièce de structure. On peut même lui donner une épaisseur supérieure à celle d'un convergent traditionnel car cette augmentation d'épaisseur, bien qu'a priori préjudiciable en termes de poids, est justifiée par l'amélioration en résultant des qualités mécaniques de la pièce de structure. L'augmentation de poids du convergent peut donc être largement compensée par une réduction de poids de la pièce de structure ou par la suppression d'un autre renfort devenu inutile. De plus, par rapport à un convergent rapporté, le convergent selon l'invention peut compenser son surpoids par l'absence de fixations reliant ledit convergent à la pièce de structure.

Dans un mode de réalisation particulier de l'invention, le convergent est constitué de la même matière que la pièce de structure.

Afin d'apporter encore plus de rigidité à la pièce de structure, le convergent peut être nervuré, ce qui lui permet, en outre, de servir de support pour des organes fonctionnels tels qu'un avertisseur sonore ou un capteur de déclenchement de coussins gonflables de sécurité.

Dans un mode de réalisation particulier, la pièce de structure est une traverse supérieure.

Un exemple particulièrement avantageux de pièce de structure selon l'invention est une face avant technique de véhicule automobile.

Dans ce cas, l'emplacement pour l'ensemble de refroidissement est situé à l'aplomb d'une traverse supérieure de la face avant technique et le convergent est situé sous la traverse.

La face avant technique est avantageusement réalisée d'un seul tenant, bien qu'elle peut également être obtenue par assemblage de pièces distinctes, mais réunies de manière que la face avant technique présente la rigidité requise, abstraction faite de la contribution du convergent.

Dans un mode de réalisation préféré, le convergent est réalisé d'un seul tenant non seulement avec la traverse supérieure mais également avec des jambages latéraux descendant de la traverse supérieure.

Afin de faciliter la compréhension de l'invention, on va maintenant en décrire un mode de réalisation fourni à titre d'exemple non limitatif, à l'aide des dessins annexés dans lesquels :

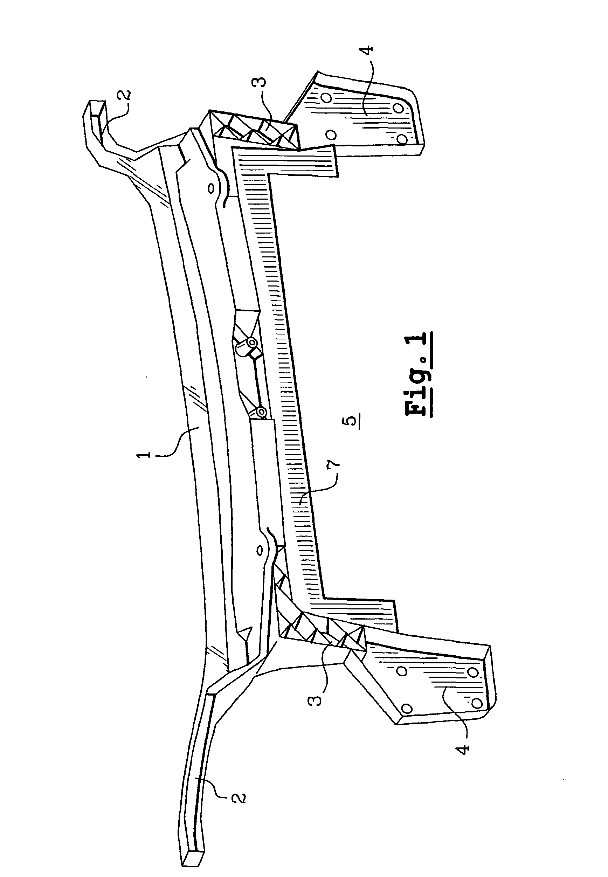

- la figure 1 représente une face avant technique en perspective,

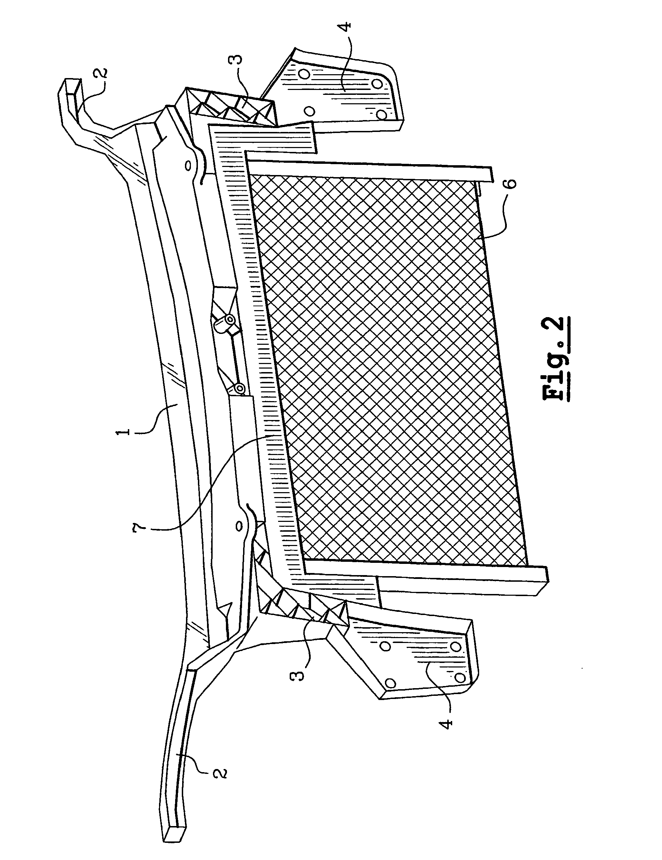

- la figure 2 est analogue à la figure 1 et montre un ensemble de refroidissement rapporté sur la face avant technique,

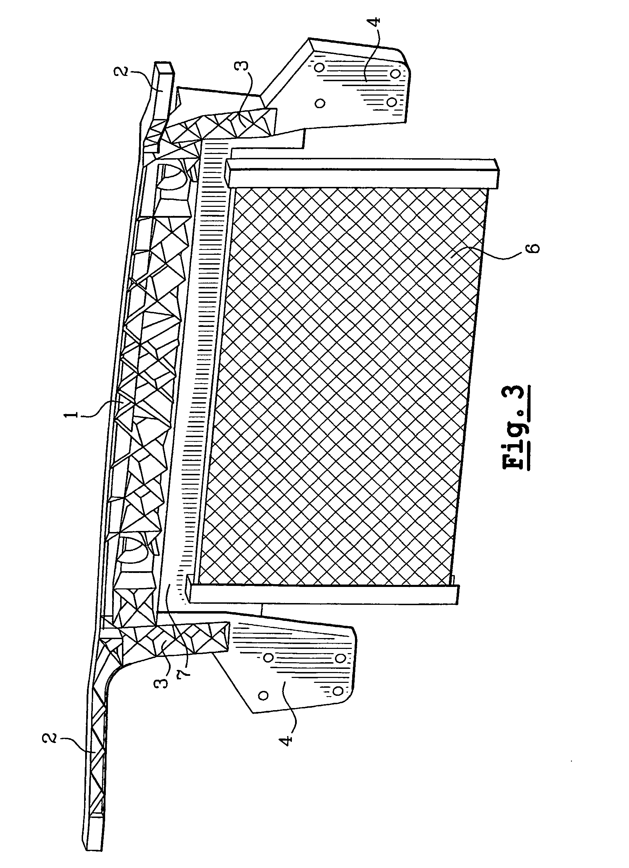

- la figure 3 est une vue de derrière de l'ensemble représenté à la figure 2.

Cette face avant technique comprend une traverse supérieure 1 prolongée à chacune de ses extrémités par une pièce support 2 qui est destinée à être fixée à la structure du véhicule, par exemple à un support de doublure d'aile (non représenté).

Chaque pièce support 2 est prévue pour supporter des organes fonctionnels (non représentés) tels que des optiques.

Un jambage latéral 3 s'étend vers le bas à partir de chacune des extrémités de la traverse, jusqu'à une platine de fixation 4 à un longeron (non représenté) du véhicule.

On voit que la face avant technique ainsi constituée réserve, entre la traverse supérieure 1 et les jambages 3, un emplacement 5 pour un ensemble de refroidissement 6 constitué par un radiateur et un groupe ventilateur (non détaillés), à l'aplomb de la traverse supérieure.

Conformément à l'invention, un convergent 7 borde les deux jambages et la traverse supérieure, en étant réalisé d'un seul tenant avec l'ensemble de la face avant technique, par injection de polypropylène par exemple.

Le dimensionnement du convergent résulte de deux préoccupations. D'une part, sa surface dans le plan général de la face avant technique est déterminée en fonction de la géométrie de l'ensemble de refroidissement et de la section de passage d'air devant être obturée pour optimiser les échanges thermiques entre cet air et l'ensemble de refroidissement. D'autre part, l'épaisseur du convergent est déterminée en fonction de la rigidité que l'on souhaite conférer à la face avant technique en profitant de la présence du convergent, notamment de la rigidité de la traverse supérieure, qui doit résister aux sollicitations du capot.

Il est bien entendu que le mode de réalisation décrit ci-dessus ne présente aucun caractère limitatif et que l'on peut y apporter toute modification utile sans pour cela sortir du cadre de l'invention.

## Revendications

1. Pièce de structure avant de véhicule automobile, comprenant une traverse supérieure (1) agencée pour permettre l'accrochage d'un capot sur ladite traverse supérieure (1), la pièce de structure étant conformée de manière à réserver un emplacement pour un ensemble de refroidissement, l'emplacement (5) pour l'ensemble de refroidissement est situé à l'aplomb de la traverse supérieure (1), cet emplacement réservé (5) constituant un passage pour de l'air réalisant des échanges thermiques avec l'ensemble de refroidissement, ladite pièce de structure avant étant pourvue d'un convergent (7) dont la fonction est de réduire la section de passage de l'air autour de l'ensemble de refroidissement, le convergent (7) s'étendant tout du long de la traverse supérieure (1), **caractérisée en ce que** le convergent est réalisé d'un seul tenant avec la pièce de structure et contribue à la rigidité de la traverse supérieure.

2. Pièce de structure selon la revendication 1, **caractérisée en ce que** le convergent (7) est constitué de la même matière que la pièce de structure.

3. Pièce de structure selon l'une quelconque des revendications 1 et 2, **caractérisée en ce que** le convergent est nervuré.

4. Pièce de structure selon l'une quelconque des revendications 1 à 3, **caractérisée en ce que** le convergent (7) sert de support pour des organes fonctionnels tels qu'un avertisseur sonore ou un capteur de déclenchement de coussins gonflables de sécurité.

5. Pièce de structure selon l'une quelconque des revendications 1 à 4, **caractérisée en ce qu'**elle est une traverse supérieure (1).

6. Pièce de structure selon l'une quelconque des revendications 1 à 4, **caractérisée en ce qu'**elle est une face avant technique de véhicule automobile.

7. Pièce de structure selon la revendication 6, **caractérisée en ce que** le convergent (7) est situé sous la traverse (1).

8. Pièce de structure selon l'une quelconque des revendications 6 et 7, **caractérisée en ce qu'**elle est réalisée d'un seul tenant

9. Pièce de structure selon l'une quelconque des revendications 6 à 8, **caractérisée en ce que** le convergent (7) est réalisé d'un seul tenant non seulement avec la traverse supérieure (1) mais également avec des jambages (3) descendant de la traverse supérieure.

## Claims

1. A front structural part for a motor vehicle, said structural part comprising a top cross-member (1) arranged to enable a hood to be fastened thereto, and being shaped in such a manner as to leave a location for a cooling assembly, the location (5) for receiving the cooling assembly being situated beneath the top cross-member (1), said location (5) constituting a passage for the air that exchanges heat with the cooling assembly, said structural part being provided with a converging air guide (7) having the function of reducing the air flow section around the cooling assembly, the converging air guide (7) extending all along the top cross member (1), **characterized in that** the converging portion is made integrally with the structural part and contributes to the rigidity of the top cross member (1).

2. A structural part according to claim 1, **characterized in that** the converging air guide (7) is made of the same material as the structural part.

3. A structural part according to claim 1 or claim 2, **characterized in that** the converging air guide is ribbed.

4. A structural part according to any one of claims 1 to 3, **characterized in that** the converging air guide (7) serves as a support for functional members such as a horn or a sensor for triggering airbags.

5. A structural part according to any one of claims 1 to 4, **characterized in that** it is a top cross-member (1).

6. A structural part according to any one of claims 1 to 4, **characterized in that** it is a front end module of a motor vehicle.

7. A structural part according to claim 6, **characterized in that** the converging air guide (7) is situated beneath a top cross-member (1).

8. A structural part according to claim 6 or claim 7, **characterized in that** it is made as a single piece.

9. A structural part according to any ane of claims 6 to 8, **characterized in that** the converging portion (7) is made integrally not only with the top cross-member (1) but also with legs (3) extending downwardly from the top cross-member.

## Patentansprüche

1. Vorderes Strukturteil für Kraftfahrzeuge, das einen oberen Querträger (1) umfasst, der angeordnet ist, um das Einhängen einer Haube am oberen Querträger (1) zu erlauben, wobei das Strukturteil derart ausgestaltet ist, dass ein Einbauplatz für eine Kühleinheit ausgespart ist, wobei sich der Einbauplatz (5) für die Kühleinheit senkrecht zum oberen Querträger (1) befindet, wobei dieser ausgesparte Einbauplatz (5) einen Durchgang für die Luft, die für den Wärmeaustausch mit der Kühleinheit sorgt, bildet, wobei das vordere Strukturteil mit einer Verengung (7) versehen ist, deren Funktion darin besteht, den Durchgangsquerschnitt der Luft um die Kühleinheit herum zu verkleinern, wobei sich die Verengung (7) über die ganze Länge des oberen Querträgers (1) erstreckt, **dadurch gekennzeichnet, dass** die Verengung in einem Stück mit dem Strukturteil ausgeführt ist und zur Steifigkeit des oberen Querträgers beiträgt.

2. Strukturteil nach Anspruch 1, **dadurch gekennzeichnet, dass** die Verengung (7) aus demselben Material wie der Strukturteil gebildet ist.

3. Strukturteil nach einem der Ansprüche 1 und 2, **dadurch gekennzeichnet, dass** die Verengung gerippt ist.

4. Strukturteil nach einem der Ansprüche 1 bis 3, **dadurch gekennzeichnet, dass** die Verengung (7) als Träger für die Funktionselemente wie ein Signalhorn oder ein Sensor zur Auslösung der Sicherheits-Airbag dient.

5. Strukturteil nach einem der Ansprüche 1 bis 4, **dadurch gekennzeichnet, dass** es ein oberer Querträger (1) ist.

6. Strukturteil nach einem der Ansprüche 1 bis 4, **dadurch gekennzeichnet, dass** es eine technische Frontplatte für Kraftfahrzeuge ist.

7. Strukturteil nach Anspruch 6, **dadurch gekennzeichnet, dass** sich die Verengung (7) unter dem Querträger befindet (1).

8. Strukturteil nach einem der Ansprüche 6 und 7, **dadurch gekennzeichnet, dass** er in einem Stück realisiert ist.

9. Strukturteil nach einem der Ansprüche 6 bis 8, **dadurch gekennzeichnet, dass** die Verengung (7) nicht nur mit dem oberen Querträger (1), sondern auch mit den vom oberen Querträger nach unten verlaufenden Stützgliedern (3) in einem Stück realisiert ist.
